# EUROPEAN PATENT SPECIFICATION

(11) **EP 3 339 269 B1**
(45) Date of publication and mention of the grant of the patent: **26.06.2019**
(21) Application number: 17207494.0
(22) Date of filing: 14.12.2017
(51) Int. Cl.: C04B 35/195, B01D 46/24, C04B 35/565, C04B 35/573, C04B 38/00

(54) **CELLULAR CERAMIC ARTICLE WITH HYBRID PORE CONFIGURATION**
ZELLENFÖRMIGER KERAMIKARTIKEL MIT HYBRIDPORENKONFIGURATION
ARTICLE CÉRAMIQUE CELLULAIRE À CONFIGURATION DE PORE HYBRIDE

(30) Priority: 20.12.2016 CN 201611183538
(43) Date of publication of application: 27.06.2018
(73) Proprietor: Guizhou Huangdi Diesel Engine Cleaner Co., Ltd., 556000 Guizhou Guizhou (CN)
(72) Inventor: HUANG, Limin, Guizhou, Guizhou 556000 (CN); HUANG, Lijin, Guizhou, Guizhou 556000 (CN); HUANG, Huibo, Guizhou, Guizhou 556000 (CN); MAO, Xin, Guizhou, Guizhou 556000 (CN)
(74) Representative: Boult Wade Tennant LLP

(56) References cited:
- EP-A1- 1 484 483
- EP-A1- 2 505 247
- US-A1- 2005 235 622

## Description

### CROSS REFERENCE TO RELATED APPLICATIONS

### FIELD OF THE INVENTION

The present disclosure relates to a cellular ceramic filter structure for disposing the automobile exhaust gas.

### BACKGROUND OF THE INVENTION

With the implementation of Euro 5 emission standards, diesel particulate filter (DPF) has become an indispensable technology for diesel vehicles. In recent years, with the increase of vehicle ownership, exhaust gas has gradually become the main source of air pollution in China's major cities. Among the source of atmospheric PM2.5 in Beijing, the share of motor vehicle exhaust emissions is as high as 22%. Moreover, the particulate matter in the exhaust gas mainly comes from diesel vehicles. With China's increasingly stringent emission control regulations on diesel vehicles in recent years, the application of DPF will have broad market prospects.

Materials currently used for DPF include oxides and non-oxides. Typical oxide materials include cordierite, aluminum titanate, mullite, aluminum oxide, etc., while non-oxide materials are mainly silicon carbide and silicon nitride. The ideal material for DPF should have a low thermal expansion coefficient, high thermal conductivity, high mechanical strength and resistance to ash corrosion, fatigue and thermal shock. Silicon carbide not only has high mechanic strength and good thermo stability, but also very high thermo conductivity. The disadvantage of silicon carbide is its high thermal expansion coefficient, making it prone to generating thermal stress during the continuous DPF regeneration process, which causes the DPF

wall to crack, leading to the failure of DPF. The silicon carbide DPF with a segmented structure of which the different parts are combined by a ceramic binder having high strength and low elastic modulus, can effectively reduce the tensile and compressive stress generated during the DPF regeneration process.

Since the DPF has thermal stack effect during DPF regeneration process, the maximum temperature and the maximum temperature gradient often appear in the central region of the rear of DPF. Due to the thermal stack effect, the conventional one-piece DPF or segmented DPF is prone to producing local thermal stress at high temperatures, causing the DPF to crack, especially in the central region of the rear of DPF where cracks or even fractures are likely to appear.

Therefore, there remains a demand in the art for a cellular ceramic article with improved thermal stability while maintaining good ash storage capacity.

The documents EP 2505247 A1, US 2005/235622 A1 and EP 1484483 A1 describe ceramic honeycomb bodies comprising one or more cellular ceramic portions.

### SUMMARY OF THE INVENTION

In order to overcome the problem that existing DPF cannot reduce the temperature at the rear during non-controllable regeneration while maintaining the small volume and large ash storage capacity, the present disclosure provides a cellular DPF structure with a hybrid pore configuration, which can reduce the back pressure while maintaining the ash storage capacity through optimizing the configuration of pores. Particularly, the cellular structure has two kinds of core structures, wherein the strip-shaped cellular portion with relatively thick wall is set in the center, surrounded by the strip-shaped cellular portion with relatively thin wall. This hybrid pore configuration design allows DPF to have various excellent characteristics such as good thermo stability and ash storage capacity, at the same time, effectively reduces the maximum temperature during regeneration, especially in the central region of the rear of the DPF.

In an aspect of the present disclosure, a cellular ceramic article with hybrid pore configuration is provided, which comprises one or more first cellular ceramic portions located centrally and one or more second ceramic cellular portions located around the first cellular ceramic portions, wherein the first cellular ceramic portion is a cellular ceramic with symmetric or asymmetric pore configuration having a first heat capacity value and a wall thickness greater than or equal to 0.28mm; the second cellular ceramic portion is a cellular ceramics with asymmetric pore configuration having a second heat capacity value and a wall thickness of less
than 0.28 mm; wherein the first heat capacity value is greater than the second heat capacity value; and the volume ratio of the first cellular ceramic portion to the entire cellular ceramic article is from 0.10 to 0.3, preferably 0.15 to 0.3, more preferably 0.15 to 0.25, such as 0.12, 0.14, 0.16, 0.18, 0.20, 0.22, 0.24, 0.26 or 0.28. The cellular ceramic article according to the foregoing aspect, wherein the first cellular ceramic portion and the second cellular ceramic portion are made of material selected from the group consisting of silicon carbide, recrystallized silicon carbide and cordierite. Preferably, the first cellular ceramic portion and the second cellular ceramic portion are both made of recrystallized silicon carbide.

The cellular ceramic article according to the first aspect, wherein the first cellular ceramic portion is made of a material selected from the group consisting of silicon carbide, recrystallized silicon carbide and cordierite, while a different material from the same group is selected to make the second cellular ceramic portion. For example, the first cellular ceramic portion is made of recrystallized silicon carbide, and the second cellular ceramic portion is made of cordierite.

If the volume ratio is too low, the first cellular ceramic portion has a too small volume to provide sufficiently high thermal shock resistance for the entire cellular ceramic article to effectively prevent the cellular ceramic article from producing cracks or fail at high temperatures. If the volume ratio is too high, the first cellular ceramic portion will be too large and provide a relatively small gas filter area, thus reducing the filtration capacity of entire cellular ceramic article, which is also undesired.

The cellular ceramic article in any one the foregoing aspects, wherein the first heat capacity value is 1000 to 1200J/L^{∗}K, preferably 1020 to 1100J/L^{∗}K, more preferably 1020 to 1050J/ L^{∗}K, such as 1020, 1040, 1060, 1080, 1100, 1120, 1140, 1160 or 1180J/L^{∗}K.

The cellular ceramic article in any one the foregoing aspects, wherein the second heat capacity value is 600 to 900J/L^{∗}K, preferably 600 to 800J/L^{∗}K, more preferably 650 to 700J/L^{∗}K, such as 620, 640, 660, 680, 700, 720, 740, 760, 780, 800, 820, 840, 860 or 880J/L^{∗}K.

The cellular ceramic article in any one the foregoing aspects, wherein the wall thickness of the first cellular ceramic portion is 0.28 to 0.4mm, such as 0.30, 0.32, 0.34, 0.36 or 0.38mm, and the mesh number is 200 to 350. The first cellular ceramic portion has a relatively high thermal shock resistance due to the relatively thick wall.

The cellular ceramic article in any one the foregoing aspects, wherein the wall thickness of the second cellular ceramic portion is 0.15 to 0.28mm, such as 0.17, 0.19, 0.21, 0.23, 0.25 or 0.27mm.

In another aspect of the present disclosure, the cellular ceramic article in any one the foregoing aspects is used to capture soot particulates in the automobile engine exhaust gas. Since the novel cellular ceramic article according to the present disclosure has both improved thermal stability and good exhaust gas filtration performance, it can be used to capture soot particulates in automobile engine exhaust gas and remove them by burning when a certain amount of soot particulates have been accumulated. Such new cellular ceramic article reduces the risk of producing cracks or fractures during regeneration at high temperatures.

In addition, by increasing the hot melt in the central region of DPF, the temperature and temperature gradient at the rear can be reduced effectively during DPF regeneration, thereby preventing the DPF from cracking to decrease filtration efficiency or even fail.

### BRIEF DESCRIPTION OF DRAWINGS

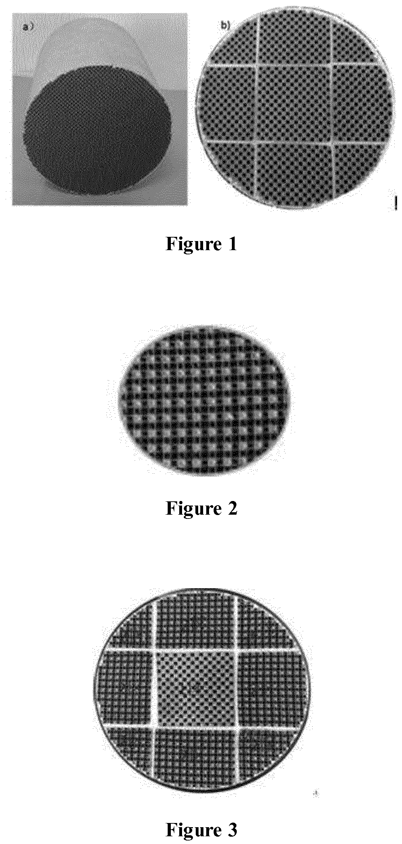

The invention will be described with reference to the following drawings. It is to be understood that the drawings are merely illustrative of the principles of the invention and are not intended to limit the scope of the invention to the particular embodiments shown in the drawings. In the drawings:
Figure la and Figure 1b are schematic views of conventional one-piece cellular ceramic article and segmented cellular ceramic article, respectively, which have uniform-pore configuration.
Figure 2 is a schematic cross-sectional view of the cellular ceramic article with asymmetric pore configuration.
Figure 3 is a schematic view of the cellular ceramic article according to the present disclosure, wherein region 1 represents the first cellular portion and region 2 represents the second cellular portion.
Figure 4 is a temperature distribution graph of each portion of conventional segmented cellular ceramic article with uniform-pore configuration and the cellular ceramic article according to the present disclosure at a high temperature.

### DETAILED DESCRIPTION

Hereinafter, the cellular ceramic article with hybrid pore configuration according to the present disclosure will be described in detail with reference to the drawings. However, it will be understood by those skilled in the art that the various embodiments given below are for the purpose of better understanding of the present invention by those skilled in the art and are not intended to limit the present disclosure. The scope of the invention is defined by the claims.

Cellular ceramic article is one of the common means for capturing the particulate matter in the exhaust gas discharged from engines of motor vehicles, especially diesel vehicles. At present, commonly used cellular ceramic filters or particulate traps generally employ cellular structures with uniform pores, such as one-piece cellular structure or mosaic cellular structure, as shown in Figure 1. Such cellular structure has such advantages as simple structure, easy preparing method, and so on. Due to stack effect, DPF is prone to forming high temperature area at the middle rear region during the uncontrollable regeneration process, which produces thermal stress, making the DPF wall crack easily and DPF fail.

For comparison, in order to overcome the problem that existing DPF cannot reduce the temperature at the rear during uncontrollable regeneration while maintaining a small volume and large ash storage capacity, the present disclosure provides a cellular ceramic article with hybrid pore configuration, which will be described in detail below with reference to the embodiments.

### Example 1 Preparation of Segmented cellular Ceramic Article with Uniform-pore Configuration (Comparative Example)

A strip of recrystallized silicon carbide cellular ceramic article was prepared according to the molding method described in Chinese Patent Application CN200610106777.1, and then multiple cellular ceramic article strips were bonded into a segmented cellular ceramic article using an adhesive. This was used as a comparative example. The cellular ceramic article has a wall thickness of 0.25 mm and a mesh number of 300. The heat capacity value was 668J/L^{∗}K measured by laser measuring method.

### Example 2 Preparation of Cellular Ceramic Article with Hybrid Pore Configuration (Present Invention)

An strip ofrecrystallized silicon carbide cellular ceramic article was prepared according to the molding method described in Chinese Patent Application CN200610106777.1, and then multiple cellular ceramic article strips were bonded to form the first cellular ceramic portion according to the present invention, which has two specifications: the first cellular ceramic portion A and the first cellular ceramic portion B, for subsequent experiments respectively.

The wall thickness of the first cellular ceramic portion A was 0.30mm and the mesh number was 200. The filter area was 7451cm²/L. The first cellular ceramic portion A, with symmetric pore configuration, accounted for 15% of the total volume of the cellular ceramic article, and has a thermal capacity of 1025J/L^{∗}K measured by laser measurement method.

The wall thickness of the first cellular ceramic portion B was 0.35mm and the mesh number was 200. The filter area was 7451cm²/L. The first cellular ceramic portion B, with symmetric pore configuration, accounted for 15% of the total volume of the cellular ceramic article, and has a thermal capacity of 1165J/L ^{∗} K measured by laser measurement method.

A number of silicon carbide cellular ceramic strips with asymmetric pore configuration were prepared according to the method provided by Kazuki Nakamura et al. ("New Asymmetric Plugging Structure of Diesel Particulate Filters for the Pressure Drop Reduction", SAE: 2014-01-1512), as the first cellular ceramic portion C. The mesh number of the first cellular ceramic portion C was 300 and the wall thickness was 0.30mm. The filter area was as high as 15,400cm²/L. The thermal capacity was 1108J/L^{∗}K measured by laser measurement method.

A number of silicon carbide cellular ceramic strips with asymmetric pore configuration were prepared according to the method provided by Kazuki Nakamura et al. ("New Asymmetric Plugging Structure of Diesel Particulate Filters for the Pressure Drop Reduction", SAE: 2014-01-1512), as the second cellular ceramic portion D. The mesh number of the second cellular ceramic portion D was 300 and the wall thickness was 0.25mm. The filter area was as high as 15,400cm²/L. The thermal capacity was 726J/L^{∗}K measured by laser measurement method.

The first cellular ceramic portion A, B or C was respectively bonded with the second cellular D to form a complete cellular ceramic article A, B or C using ceramic binder, wherein the first ceramic portion A, B or C was located in the in the center and surrounded by the second ceramic portion D. The first ceramic portion A, B or C accounted for 15% of the total volume of the entire cellular ceramic article.

### Example 3: Test Temperature Distribution of Cellular Article According to Comparative Example and Present Invention

In the embodiments of the present disclosure, since proportion of the first cellular ceramic portion in the entire cellular ceramic article is relatively low, for example, about 15%, its influence on the filtration area of the entire cellular ceramic article is relatively small and can be substantially ignored. In other words, the filtration area of cellular ceramic article of the present disclosure is equivalent to that of which was constructed completely with second cellular ceramic portion with asymmetric pore configuration, therefore, their carbon loading / ash storage capacity are also substantially equivalent.

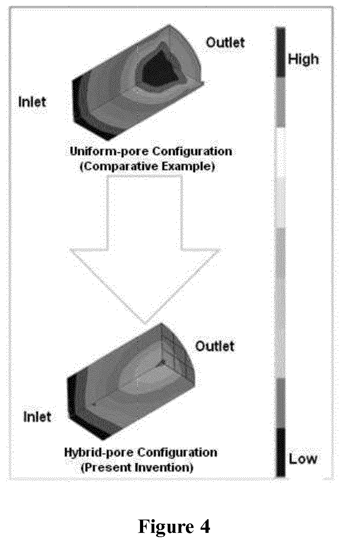

The cellular ceramic article of the comparative example and the cellular ceramic article A, B and C of the present disclosure were respectively encapsulated into the steel shell and then placed behind the exhaust gas discharge pipe of the diesel engine. Carbon loading test was carried out until the soot loading of the cellular ceramic article reached 5.5g/L. Then, the soot-loaded cellular ceramic article was regenerated using a cryogenic heater (see Chinese Patent Application CN103104319A) installed in the exhaust emission path. The temperature and pressure during the testing process were recorded respectively by a temperature sensor and a pressure sensor installed around the cellular ceramic article. The temperature distributions of each region of the cellular ceramic article of the present disclosure and comparative example were shown in Figure 4. In this experiment, the maximum temperature of the cellular ceramic article with hybrid pore configuration of the present disclosure was 860°C and the maximum temperature gradient was 32°C/cm during the regeneration process. In contrast, the maximum temperature of the cellular structure with a uniform-pore configuration is 1,020°C and the maximum temperature gradient is 116°C/cm during the regeneration.

As shown in Figure 4, in the comparative example, the temperature in the central region (dark region) of the outlet end (middle rear region) of the cellular ceramic article with uniform-pore configuration was relatively high. In contrast, the temperature in the central region (light region) of the outlet end (middle rear region) of the cellular ceramic article with hybrid pore configuration of the present disclosure was relatively low. Thus, by using the cellular ceramic article with hybrid pore configuration of the present disclosure, the temperature in the middle rear region was greatly reduced, which effectively reduces the risk of producing cracks or fractures of the cellular structure at high temperatures. In addition, in the case when the central temperature is high, placing the cellular ceramic portion with a relatively thick wall and a relatively high heat capacity in the central region according to the present disclosure, makes it resistant to relatively high temperature, which is also advantageous to reduce the risk of producing cracks or fractures.

## Claims

1. A cellular ceramic article having hybrid pore configuration, comprising one or more first cellular ceramic portions in the center and one or more second cellular ceramic portions surrounding the first cellular ceramic portion, wherein:
the first cellular ceramic portion is cellular ceramic having symmetric or asymmetric pore configuration with a first heat capacity value and a wall thickness of 0.28mm or more;
the second cellular ceramic portion is cellular ceramic having asymmetric pore configuration with a second heat capacity value and a wall thickness of less than 0.28mm;
the first heat capacity value is greater than the second heat capacity value; and
the volume ratio of the first cellular ceramic portion to the entire cellular ceramic article is from 0.10 to 0.3, preferably 0.15 to 0.3, more preferably 0.15 to 0.25.

2. The cellular ceramic article according to claim 1, wherein the first cellular ceramic portion and the second cellular ceramic portion are made of one material selected from the group consisting of silicon carbide, recrystallized silicon carbide and cordierite.

3. The cellular ceramic article according to claim 1, wherein the first cellular ceramic portion and the second cellular ceramic portion are made from two different materials selected from the group consisting of silicon carbide, recrystallized silicon carbide and cordierite.

4. The cellular ceramic article according to claim 1, wherein the first heat capacity value is 1000 to 1200J/L^{∗}K, preferably 1020 to 1100J/L^{∗}K, more preferably 1020 to 1050J /L^{∗}K.

5. The cellular ceramic article according to claim 1, wherein the second heat capacity value is 600 to 900J/L^{∗}K, preferably 600 to 800J/L^{∗}K, more preferably 650 to 700J/L^{∗}K.

6. The cellular ceramic article according to claim 1, wherein the first cellular ceramic portion has the wall thickness of 0.28 to 0.4mm, and the mesh number of 200 to 350.

7. The cellular ceramic article according to claim 1, wherein the second cellular ceramic portion has the wall thickness of 0.15 to 0.28mm.

8. The cellular ceramic article according to any one of claims 1 to 3, wherein both of the first and second cellular ceramic portions have square or rectangular cross section; or the first cellular ceramic portion has circular cross section and the second cellular ceramic portion has annular or fan-shaped cross section.

9. Use of the cellular ceramic article according to any one of claims 1 to 8 for capturing soot particles in vehicle engine exhaust gas.

## Patentansprüche

1. Zellenförmiger Keramikartikel mit Hybridporenkonfiguration, umfassend einen oder mehrere erste zellenförmige Keramikabschnitte in der Mitte und einen oder mehrere zweite zellenförmige Keramikabschnitte, die den ersten zellenförmigen Keramikabschnitt umgeben, bei dem:
der erste zellenförmige Keramikabschnitt zellenförmige Keramik mit symmetrischer oder asymmetrischer Porenkonfiguration mit einem ersten Wärmekapazitätswert und einer Wanddicke von 0,28 mm oder mehr ist;
der zweite zellenförmige Keramikabschnitt zellenförmige Keramik mit asymmetrischer Porenkonfiguration mit einem zweiten Wärmekapazitätswert und einer Wanddicke von weniger als 0,28 mm ist;
der erste Wärmekapazitätswert größer ist als der zweite Wärmekapazitätswert; und
das Volumenverhältnis des ersten zellenförmigen Keramikabschnitts zum gesamten zellenförmigen Keramikartikel von 0,10 bis 0,3, vorzugsweise 0,15 bis 0,3, insbesondere 0,15 bis 0,25 beträgt.

2. Zellenförmiger Keramikartikel nach Anspruch 1, bei dem der erste zellenförmige Keramikabschnitt und der zweite zellenförmige Keramikabschnitt aus einem Material hergestellt sind, das ausgewählt ist aus der Gruppe bestehend aus Siliziumkarbid, rekristallisiertem Siliziumkarbid und Cordierit.

3. Zellenförmiger Keramikartikel nach Anspruch 1, bei dem der erste zellenförmige Keramikabschnitt und der zweite zellenförmige Keramikabschnitt aus zwei verschiedenen Materialien hergestellt sind, ausgewählt aus der Gruppe bestehend aus Siliziumkarbid, rekristallisiertem Siliziumkarbid und Cordierit.

4. Zellenförmiger Keramikartikel nach Anspruch 1, bei dem der erste Wärmekapazitätswert 1000 bis 1200 J/L*K, vorzugsweise 1020 bis 1100 J/L*K, insbesondere 1020 bis 1050 J/L*K beträgt.

5. Zellenförmiger Keramikartikel nach Anspruch 1, bei dem der zweite Wärmekapazitätswert 600 bis 900 J/L*K, vorzugsweise 600 bis 800 J/L*K, insbesondere 650 bis 700 J/L*K beträgt.

6. Zellenförmiger Keramikartikel nach Anspruch 1, bei dem der erste zellenförmige Keramikabschnitt die Wanddicke von 0,28 bis 0,4 mm und die Maschenzahl von 200 bis 350 aufweist.

7. Zellenförmiger Keramikartikel nach Anspruch 1, bei dem der zweite zellenförmige Keramikabschnitt die Wanddicke von 0,15 bis 0,28 mm aufweist.

8. Zellenförmiger Keramikartikel nach einem der Ansprüche 1 bis 3, bei dem sowohl der erste als auch der zweite zellenförmige Keramikabschnitt einen quadratischen oder rechteckigen Querschnitt aufweisen; oder der erste zellenförmige Keramikabschnitt einen kreisförmigen Querschnitt aufweist und der zweite zellenförmige Keramikabschnitt einen ringförmigen oder fächerförmigen Querschnitt aufweist.

9. Verwendung des zellenförmigen Keramikartikels nach einem der Ansprüche 1 bis 8 zum Einfangen von Rußpartikeln in den Abgasen von Fahrzeugmotoren.

## Revendications

1. Article en céramique cellulaire ayant une configuration de pore hybride, comprenant une ou plusieurs première(s) partie(s) en céramique cellulaire au centre et une ou plusieurs deuxième(s) partie(s) en céramique cellulaire entourant la première partie en céramique cellulaire, dans lequel :
la première partie en céramique cellulaire est une céramique cellulaire ayant une configuration de pore symétrique ou asymétrique avec une première valeur de capacité thermique et une épaisseur de paroi supérieure ou égale à 0,28 mm ;
la deuxième partie en céramique cellulaire est une céramique cellulaire ayant une configuration de pore asymétrique avec une deuxième valeur de capacité thermique et une épaisseur de paroi inférieure à 0,28 mm ;
la première valeur de capacité thermique est supérieure à la deuxième valeur de capacité thermique ; et
le rapport de volume de la première partie en céramique cellulaire sur l'article en céramique cellulaire entier est compris entre 0,10 et 0,3, de préférence entre 0,15 et 0,3, plus préférablement entre 0,15 et 0,25.

2. Article en céramique cellulaire selon la revendication 1, dans lequel la première partie en céramique cellulaire et la deuxième partie en céramique cellulaire sont réalisées en un matériau choisi dans le groupe constitué en le carbure de silicium, le carbure de silicium recristallisé et la cordiérite.

3. Article en céramique cellulaire selon la revendication 1, dans lequel la première partie en céramique cellulaire et la deuxième partie en céramique cellulaire sont réalisées à partir de deux matériaux différents choisis dans le groupe consistant en le carbure de silicium, le carbure de silicium recristallisé et la cordiérite.

4. Article en céramique cellulaire selon la revendication 1, dans lequel la première valeur de capacité thermique est comprise entre 1000 et 1200 J/L*K, de préférence entre 1020 et 1100 J/L*K, plus préférablement entre 1020 et 1050 J/L*K.

5. Article en céramique cellulaire selon la revendication 1, dans lequel la deuxième valeur de capacité thermique est comprise entre 600 et 900 J/L*K, de préférence entre 600 et 800 J/L*K, plus préférablement entre 650 et 700 J/L*K.

6. Article en céramique cellulaire selon la revendication 1, dans lequel la première partie en céramique cellulaire a une épaisseur de paroi comprise entre 0,28 et 0,4 mm et un nombre de mailles compris entre 200 et 350.

7. Article en céramique cellulaire selon la revendication 1, dans lequel la deuxième partie en céramique cellulaire a une épaisseur de paroi comprise entre 0,15 et 0,28 mm.

8. Article en céramique cellulaire selon l'une quelconque des revendications 1 à 3, dans lequel les première et deuxième parties en céramique cellulaire ont toutes deux une coupe transversale carrée ou rectangulaire ; ou la première partie en céramique cellulaire a une coupe transversale circulaire et la deuxième partie en céramique cellulaire a une coupe transversale annulaire ou en forme d'éventail.

9. Utilisation de l'article en céramique cellulaire selon l'une quelconque des revendications 1 à 8 pour capturer des particules de suie dans le gaz d'échappement de moteur de véhicule.
